# EUROPÄISCHE PATENTSCHRIFT

(11) **EP 2 359 964 B1**
(45) Veröffentlichungstag und Bekanntmachung des Hinweises auf die Patenterteilung: **20.11.2013**
(21) Anmeldenummer: 11150696.0
(22) Anmeldetag: 12.01.2011
(51) Int. Cl.: B22F 3/105, B22F 5/00, B22F 7/00

(54) **Verfahren zum Herstellen eines 3-dimensionalen Bauteils mittels selektiven Laserschmelzens (SLM)**
Process for Producing a 3-Dimensional Component by Means of Selective Laser Melting (SLM)
Procédé de fabrication d'un composant tridimensionnel à l'aide d'une fusion laser sélective (SLM)

(30) Priorität: 26.01.2010 US 298270 P
(43) Veröffentlichungstag der Anmeldung: 24.08.2011
(73) Patentinhaber: Alstom Technology Ltd, 5400 Baden (CH)
(72) Erfinder: Hövel, Simone, 5408 Ennetbaden (CH); Stankowski, Alexander, 5303 Würenlingen (CH); Rickenbacher, Lukas, 4053 Basel (CH)

(56) Entgegenhaltungen:
- EP-A1- 2 022 622
- EP-A2- 1 887 107
- WO-A2-2009/010034
- US-A- 4 927 992
- US-A- 5 296 062
- US-A1- 2007 145 629
- VAMSI KRISHNA B ET AL: "Functionally graded Co-Cr-Mo coating on Ti-6Al-4V alloy structures", ACTA BIOMATERIALIA, ELSEVIER, AMSTERDAM, NL, Bd. 4, Nr. 3, 1. Mai 2008 (2008-05-01), Seiten 697-706, XP022588850, ISSN: 1742-7061, DOI: DOI:10.1016/J.ACTBIO.2007.10.005 [gefunden am 2007-10-24]

## Beschreibung

### TECHNISCHES GEBIET

Die vorliegende Erfindung bezieht sich auf das Gebiet der Formgebungsverfahren. Sie betrifft ein Verfahren zum Herstellen eines 3-dimensionalen Bauteils mittels selektiven Laserschmelzens (SLM) gemäss dem Oberbegriff des Anspruchs 1.

### STAND DER TECHNIK

Aus der Druckschrift EP 946 325 B1 ist ein Verfahren zur Herstellung eines Formkörpers bekannt, bei dem der Formkörper durch schichtweises Aufbauen aus einem pulverförmigen, metallischen Werkstoff erzeugt wird, wobei das Werkstoffpulver durch einen Laserstrahl auf Schmelztemperatur erhitzt wird, der in mehreren Spuren über den vorgegebenen Bereich der Werkstoffpulverschicht geführt wird (SLM-Verfahren). Der Aufbau des Formkörpers erfolgt auf einem Hubtisch. Problematisch ist hierbei die spätere Trennung des fertigen Formkörpers von der Bauplattform des Hubtisches.

Eine solche Trennbarkeit ist dagegen nicht notwendig, wenn der Formkörper auf einen anderen Körper direkt aufgebracht wird (siehe zum Beispiel die Druckschrift US 2001/0014403 A1).

Bei dem vom SLM-Verfahren abweichenden Lasersintern (siehe zum Beispiel die Druckschrift US 2006/0186101 A1) ist vorgeschlagen worden, zur Trennung des fertigen Formkörpers von der Unterlage zwischen Formkörper und Unterlage eine Sollbruchstelle auszubilden, an der der fertige Formkörper abgebrochen werden kann. Eine derartige Trennbarkeit ist einerseits schlecht handhabbar und andererseits mit am Formkörper verbleibenden Unregelmässigkeiten verbunden, die eine aufwändige Nachbearbeitung nötig machen.

Letzteres trifft nachteilig auch auf die in US 2007/0145629 A1 und im Artikel von Vamsi Krishn B. et al: "Functionally graded Co-Cr-Mo coating on Ti-6Al-4V alloy", Acta Biomaterialia 4 (2008), S. 697-706 beschriebenen Verfahren zu. In US 2007/0145629 A1 wird beispielweise ein Verfahren unter Verwendung von Laserstrahlen zur Herstellung von Miniaturkörpern auf einem Träger beschrieben, bei dem zwischen dem Träger und den Miniaturkörpern gesinterte Abstandskörper gebildet werden, die zu kleine Kontaktbereichsstellen und Leerstellen aufweisen und daher bereits durch geringe Scherkräfte zerstörbar sind.

### DARSTELLUNG DER ERFINDUNG

Es ist daher eine Aufgabe der Erfindung, ein Verfahren der eingangs genannten Art anzugeben, welches die Nachteile bekannter Verfahren vermeidet und sich insbesondere dadurch auszeichnet, dass die Trennung von Bauteil und Unterlage beziehungsweise Plattform auf einfache Weise ohne Werkzeuge durchgeführt werden kann.

Die Aufgabe wird durch die Gesamtheit der Merkmale des Anspruchs 1 gelöst. Bei dem erfindungsgemässen Verfahren wird das Bauteil auf einer Plattform beziehungsweise Unterlage durch sukzessives Aufschmelzen von Metallpulver-Schichten unter Ausbildung einer übereinander liegenden Schichtenfolge gebildet. Das Verfahren zeichnet sich dadurch aus, dass zur leichteren Trennung des fertigen Bauteils von der Plattform beziehungsweise seiner Unterlage zwischen dem Bauteil und der Plattform beziehungsweise der Unterlage eine Trennschicht vorgesehen wird, welche eine Trennung des fertigen Bauteils von der Plattform beziehungsweise der Unterlage ohne Beschädigung des fertigen Bauteils ermöglicht, wobei die Trennschicht aus einem schmelzbaren Material besteht, dessen Schmelzpunkt kleiner ist als der Schmelzpunkt des zur Ausbildung des Bauteils verwendeten ersten Metallpulvers. Als Unterlage kann dabei insbesondere ein bereits vorher gefertigtes Bauteil gleicher Art inklusive Trennschicht dienen. Nach dem Fertigstellen des Bauteils oder der Bauteile wird die Trennschicht ganz entfernt, dadurch dass ihre Festigkeit durch Aufschmelzen so herabgesetzt wird, dass die Bauteile von der Plattform beziehungsweise Unterlage ohne Hilfe von Werkzeugen abgenommen werden können. Hierdurch entfallen aufwändige und die Bauteile beeinträchtigende Bearbeitungsprozesse für die Trennung. Insbesondere können mehrere Bauteile übereinander durch Trennschichten getrennt hergestellt und in einem einzigen Trennungsvorgang voneinander beziehungsweise von der Plattform getrennt werden.

Vorzugsweise wird die Trennschicht aus einem zweiten Metallpulver gebildet, das schichtenweise, insbesondere mittels Laserstrahlung, aufgeschmolzen wird.

Die Trennschicht kann dabei als eine homogene Schicht ausgebildet werden.

Die Trennschicht kann aber auch als mehrschichtige Schichtanordnung ausgebildet werden.

Eine andere Ausgestaltung des erfindungsgemässen Verfahrens ist dadurch gekennzeichnet, dass die Trennschicht aus einem Lot, insbesondere einer Lot-Legierung auf der Basis eines Metalls aus der Reihe Al, Ag, Cu, Sn, Cd, Zn, Pb, In, Ga, Bi und Sb gebildet wird.

Eine weitere Ausgestaltung des Verfahrens nach der Erfindung ist dadurch gekennzeichnet, dass das schmelzbare Material der Trennschicht eine Schmelztemperatur aufweist, die oberhalb 100 °C liegt.

Vorzugsweise weist das schmelzbare Material der Trennschicht eine Schmelztemperatur auf, die oberhalb 300 °C liegt.

Gemäss einer anderen Ausgestaltung des Verfahrens liegt der Schmelzpunkt des zur Ausbildung des Bauteils verwendeten ersten Metallpulvers oberhalb 700 °C.

Insbesondere liegt der Schmelzpunkt des zur Ausbildung des Bauteils verwendeten ersten Metallpulvers zwischen 700 °C und 1700 °C.

Eine weitere Ausgestaltung des erfindungsgemässen Verfahrens ist dadurch gekennzeichnet, dass als erstes Metallpulver ein Pulver aus der Reihe Nickelbasislegierung, Kobaltbasislegierung, Titanbasislegierung und Eisenbasislegierung verwendet wird.

Gemäss einer anderen Ausgestaltung wird zur Trennung des fertigen Bauteils von der Plattform beziehungsweise der Unterlage die zugehörige Trennschicht ohne weitere mechanische Bearbeitung aufgeschmolzen.

Insbesondere wird die Trennschicht durch lokales Aufheizen im Bereich der Trennschicht aufgeschmolzen.

Dabei kann das lokale Aufheizen durch induktive Erwärmung bewirkt werden.

Das lokale Aufheizen kann aber auch mittels Bestrahlung erfolgen.

Ebenfalls ist es denkbar, dass das lokale Aufheizen in einem aufgeheizten Bad erfolgt.

Eine andere Ausgestaltung des erfindungsgemässen Verfahrens ist dadurch gekennzeichnet, dass eine Trennschicht verwendet wird mit einer Dicke zwischen 30 µm und 300 µm, vorzugsweise zwischen 50 µm und 150 µm, insbesondere zwischen 60 µm und 100 µm.

Weiterhin kann es von Vorteil sein, wenn das Bauteil zur angrenzenden Trennschicht hin je nach Anwendung mit einem mehr oder weniger grossen Übermass hergestellt wird, welches eine Interdiffusionszone umfasst, deren Dicke sich nach der Art des schmelzbaren Materials der angrenzenden Trennschicht richtet, und dass das Übermass nach Fertigstellung des Bauteils und Trennung des Bauteils von der Plattform beziehungsweise Unterlage entfernt wird.

Insbesondere beträgt die Dicke der Interdiffusionszone nicht mehr als 500 µm, und ist vorzugsweise kleiner als 200 µm.

Die Trennschicht kann aber auch aus einer Metallfolie gebildet werden.

Insbesondere kann die Metallfolie mittels Laserstrahlung an ihrem Einsatzort fixiert werden.

Besonders vorteilhaft ist es, wenn die Metallfolie einen Zusatz zur Absenkung des Schmelzpunktes aufweist, und wenn der Zusatz so gewählt ist, dass er, insbesondere beim Aufheizen der Trennschicht, nicht in das Bauteil eindiffundiert.

Weiterhin kann es von Vorteil sein, wenn beim Erzeugen der Trennschicht zur Trennung der verschiedenen Metallpulver ein randseitig begrenzendes Formwerkzeug verwendet wird.

Eine noch andere Ausgestaltung des Verfahrens nach der Erfindung ist dadurch gekennzeichnet, dass mehrere Bauteile nacheinander und in einem Stapel über einander hergestellt werden, wobei das zuvor fertig gestellte Bauteil als Unterlage für das nächste Bauteil dient, und dass zwischen benachbarten Bauteilen jeweils eine Trennschicht angeordnet wird.

Besonders einfach ist die Herstellung, wenn die mehreren Bauteile untereinander gleich sind, und wenn benachbarte Bauteile im Bezug auf die Trennschicht jeweils spiegelbildlich zueinander angeordnet sind, so dass sie mit gleichen Flächen aneinander stossen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1 bis 9: verschiedene Schritte bei der Herstellung von Bauteilen gemäss einem Ausführungsbeispiel der Erfindung, wobei
- Fig. 1: die leere Plattform zeigt,
- Fig. 2 und 3: das Aufbringen einer ersten Trennschicht auf die Plattform zeigen,
- Fig. 4 und 5: das Erzeugen eines ersten Bauteils auf der ersten Trennschicht zeigen,
- Fig. 6: das Aufbringen einer zweiten Trennschicht auf das erste Bauteil zeigt,
- Fig. 7: das Erzeugen eines zweiten, spiegelbildlich ausgerichteten Bauteils auf der zweiten Trennschicht zeigt,
- Fig. 8: verschiedene Arten der Trennung durch Aufschmelzen der Trennschichten zeigt und
- Fig. 9: das endgültige Trennen der Bauteile ohne Werkzeuge zeigt.

### WEGE ZUR AUSFÜHRUNG DER ERFINDUNG

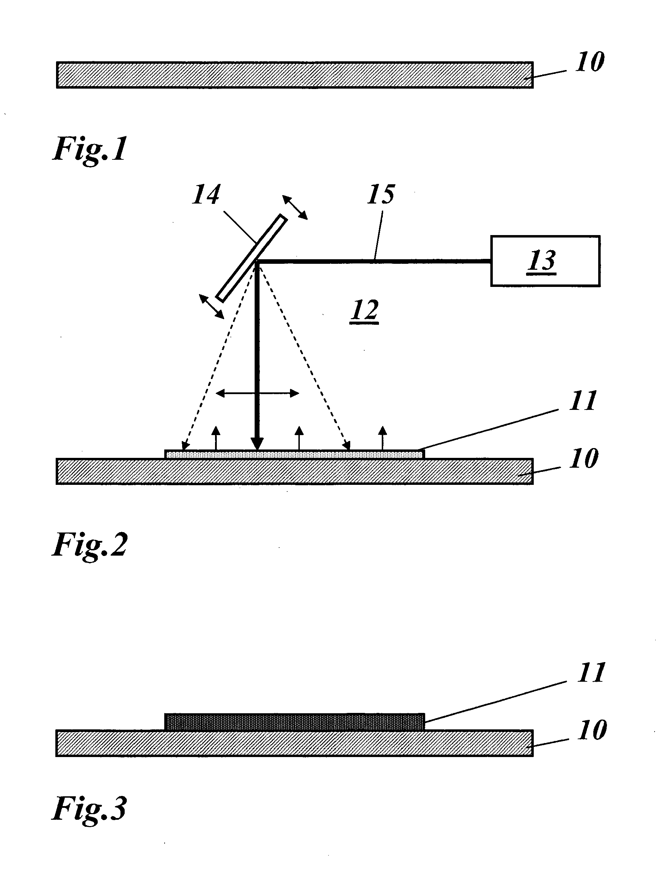

In den Figuren 1 bis 9 sind verschiedene Schritte bei der Herstellung von Bauteilen gemäss einem Ausführungsbeispiel der Erfindung dargestellt. Die herzustellenden Bauteile sind dabei als einfache Körper von kegelstumpfartiger oder pyramidenstumpfartiger Gestalt dargestellt. Es versteht sich von selbst, dass die Bauteile kompliziertere, auch mehrfach zusammenhängende Strukturen aufweisen können, soweit dies mit dem Verfahren des selektiven Laserschmelzens (Selective Laser Melting = SLM) vereinbar ist.

Das dargestellte Verfahren geht gemäss Fig. 1 aus von einer Plattform 10, die auf an sich bekannter Weise vertikal verfahrbar in einem nicht dargestellten Pulverbad angeordnet ist, so dass auf ihrer Oberfläche sukzessive Pulverschichten von vorbestimmter Dicke bereitgestellt werden können (siehe z. B. die Druckschrift EP 946 325).

Die Besonderheit des hier beschriebenen Verfahrens besteht nun darin, dass gemäss Fig. 2 und Fig. 3 zunächst auf die Plattform 10 eine Trennschicht 11 aufgebracht wird, die ein späteres Trennen des aus einem ersten Metallpulver herzustellenden Bauteils von der Plattform 10 ermöglichen und insbesondere erleichtern soll. Die Trennschicht 11 kann durch eine oder mehrere Lagen einer speziellen Metallfolie erzeugt werden, deren Schmelzpunkt deutlich unterhalb des Schmelzpunktes des herzustellenden Bauteils liegt, so dass durch einen abgestimmten Aufheizprozess die Folie geschmolzen werden kann, ohne die Festigkeit des Bauteils zu beeinträchtigen. Im Beispiel der Fig. 2 und Fig. 3 wird die Trennschicht 11 jedoch alternativ durch Aufschmelzen einer oder mehrerer Schichten eines zweiten Metallpulvers erzeugt, dessen Schmelzpunkt deutlich unterhalb des Schmelzpunktes des ersten Metallpulvers für das herzustellenden Bauteils liegt.

Zum Aufschmelzen des zweiten Metallpulvers für die Trennschicht 11 wird eine Laserapparatur 12 verwendet, bei der ein Laser 13 einen Laserstrahl 15 über einen verschwenkbaren Umlenkspiegel 14 auf die aufzuschmelzende Pulverschicht auf der Plattform 10 schickt, der dann durch eine entsprechend gesteuerte Schwenkbewegung des Umlenkspiegels 14 in einer zeilenartigen Abtastbewegung über die Fläche fährt und eine durchgehende Schicht aus aufgeschmolzenem zweiten Metallpulver erzeugt. Für grössere Dicken der Trennschicht 11 wird der Vorgang wiederholt, indem mehrere Pulverschichten übereinander aufgebracht und sukzessive aufgeschmolzen werden. Im Rahmen der Erfindung hat es sich als günstig herausgestellt, Trennschichten 11 mit einer Dicke zwischen 30 µm und 300 µm, vorzugsweise zwischen 50 µm und 150 µm, insbesondere zwischen 60 µm und 100 µm, einzusetzen, um mit möglichst geringem Aufwand eine sichere Trennung der Bauteile zu ermöglichen.

Wenn der Schmelzpunkt des zur Ausbildung des Bauteils verwendeten ersten Metallpulvers oberhalb 700 °C liegt, was im Rahmen der Erfindung bevorzugt der Fall ist, wird die Trennschicht 11 aus einem pulverförmigen Lot-Material, insbesondere einer Lot-Legierung auf der Basis eines Metalls aus der Reihe Al, Ag, Cu, Sn, Cd, Zn, Pb, In, Ga, Bi und Sb gebildet. Unabhängig davon, ob für den Aufbau der Trennschicht 11 ein Metallpulver oder eine Folie eingesetzt wird, sollte das schmelzbare Material der Trennschicht 11 eine Schmelztemperatur aufweisen, die oberhalb 100 °C, insbesondere oberhalb 300 °C, liegt.

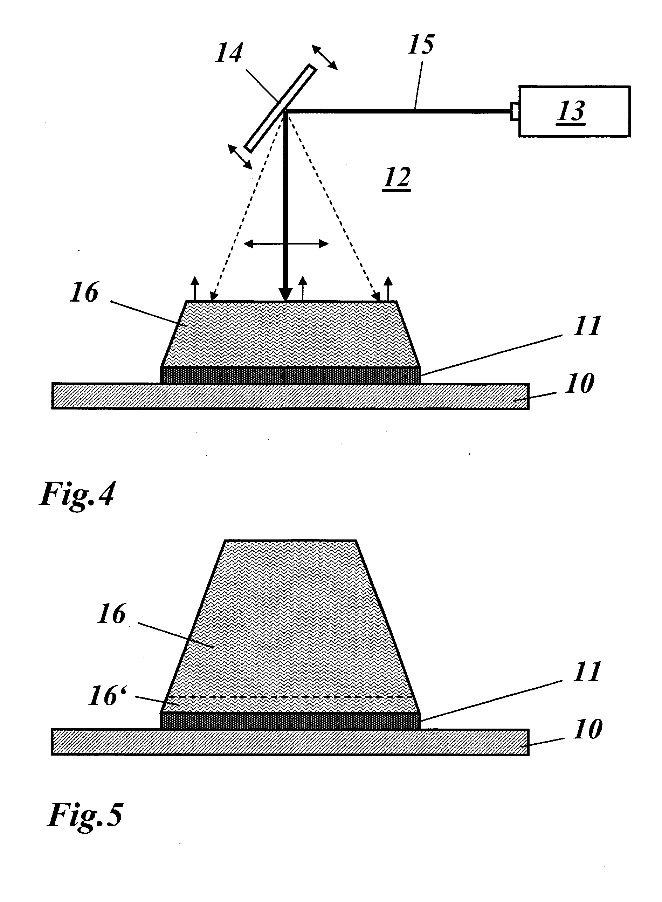

Wenn die Trennschicht 11 in der gewünschten Dicke fertig gestellt ist (Fig. 3), kann gemäss Fig. 4 und Fig. 5 ein erstes Bauteil 16 auf der Trennschicht 11 erzeugt werden. Dazu wird ein erstes Metallpulver eingesetzt, dessen Schmelzpunkt wesentlich höher ist als der Schmelzpunkt der Trennschicht 11, und - wie bereits erwähnt - oberhalb 700 °C liegt. Vorzugsweise kann der Schmelzpunkt des zur Ausbildung des Bauteils 16 verwendeten ersten Metallpulvers zwischen 700 °C und 1700 °C liegen. Als Material kommt dabei insbesondere ein Pulver aus der Reihe Nickelbasislegierung, Kobaltsbasislegierung, Titanbasislegierung und Eisenbasislegierung, z. B. Stahl, infrage.

Das Bauteil 16 wird schichtweise aufgebaut, indem sukzessive dünne Schichten aus dem ersten Metallpulver aufgeschmolzen werden. Zum Aufschmelzen wird wiederum eine Laserapparatur 12 der bereits beschriebenen Art eingesetzt, wobei die Steuerung des Laserstrahls nach Massgabe der einzelnen Schichten eines in Schichten zerlegten CAD-Modells des Bauteils 16 erfolgt (Fig. 4).

Selbst bei sorgfältiger Auswahl der Materialen für das Bauteil 16 und die Trennschicht 11 kann es vorkommen, dass aufgrund der bei der Herstellung auftretenden erhöhten Temperaturen Stoffe von der Trennschicht in angrenzende Bereiche des Bauteils 16 diffundieren und dort zu unerwünschten Effekten führen. Um derartige Einflüsse sicher auszuschliessen, kann das Bauteil 16 zur angrenzenden Trennschicht 11 hin mit einem Übermass hergestellt werden, welches eine Interdiffusionszone 16' (Fig. 5) umfasst, deren Dicke sich nach der Art des schmelzbaren Materials der angrenzenden Trennschicht 11 richtet, und die nach Fertigstellung des Bauteils 16 und Trennung des Bauteils 16 von der Plattform 10 (beziehungsweise einer anderen Unterlage) durch maschinelle Bearbeitung entfernt wird. Es hat sich als günstig und für die meisten Fälle als ausreichend herausgestellt, dass die Dicke der Interdiffusionszone 16' nicht mehr als 500 µm beträgt, vorzugsweise kleiner ist als 200 µm.

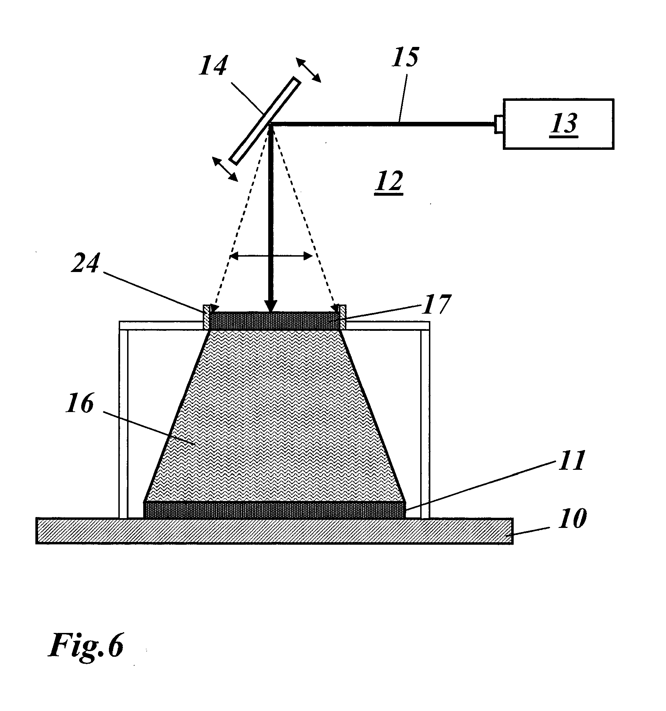

Nach Fertigstellung des (ersten) Bauteils 16 (Fig. 5) können auf besonders einfache Weise weitere Bauteile erzeugt werden, wobei das bereits fertig gestellte erste Bauteil 16 anstelle der Plattform 10 als Unterlage dient. Dazu wird gemäss Fig. 6 auf der freien Oberseite des ersten Bauteils 16 eine zweite Trennschicht 17 aufgebracht, die aus dem selben Material besteht und auf dieselbe Weise erzeugt wird, wie die erste Trennschicht 11. Bei der Herstellung der zweiten Trennschicht 17 kann, wie dies in Fig. 6 stark vereinfacht dargestellt ist, ein den Rand der Trennschicht 17 begrenzendes Formwerkzeug 24 eingesetzt werden, das zugleich die unterschiedliche Metallpulver für das Bauteil 16 und die Trennschicht 17 voneinander trennt.

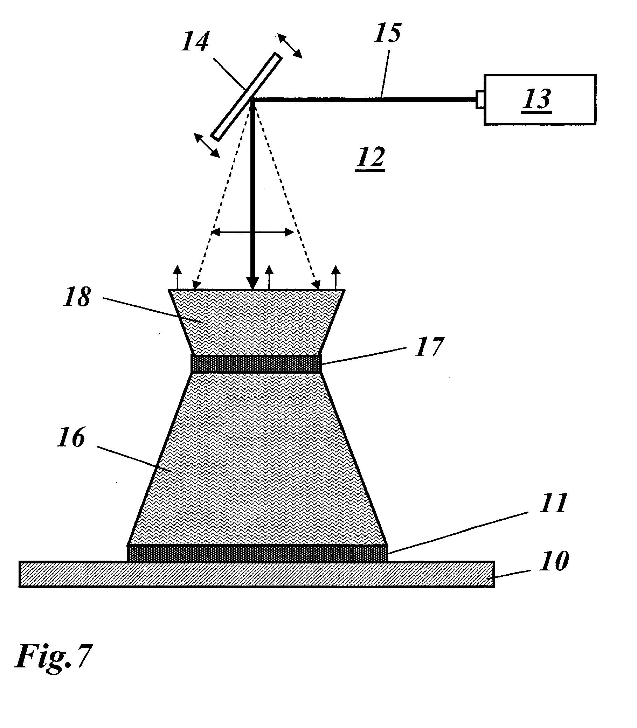

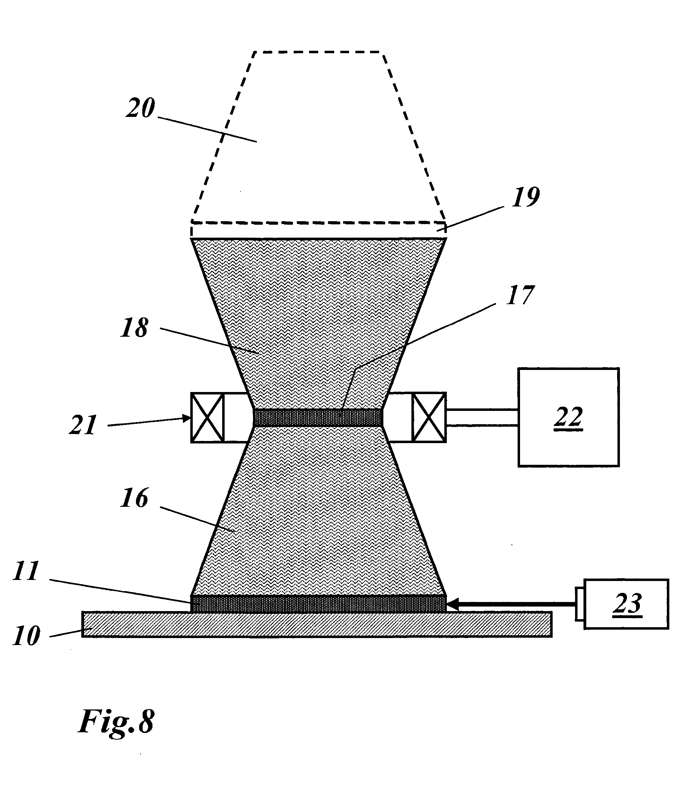

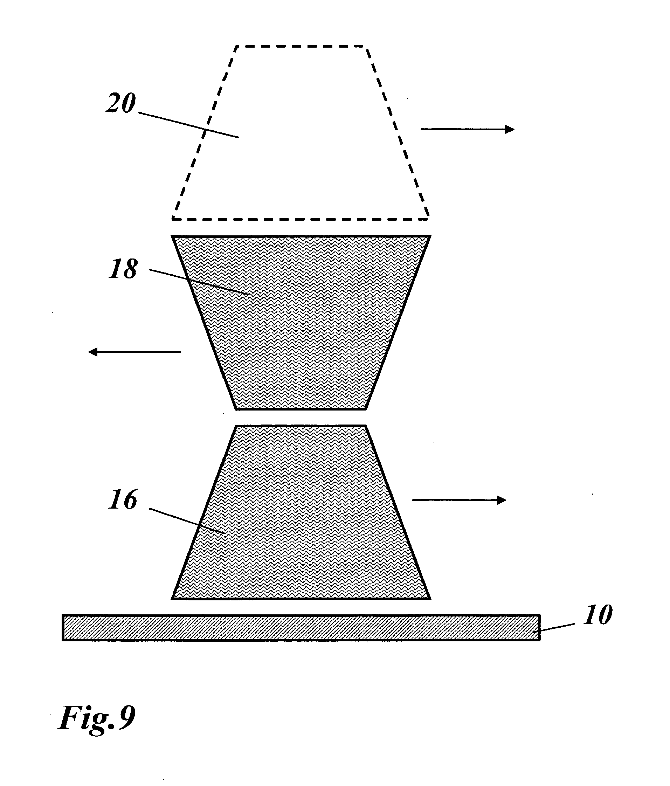

Nach Fertigstellung der zweiten Trennschicht 17 kann gemäss Fig. 7 auf dem ersten Bauteil 16 als Unterlage ein zweites Bauteil 18 erzeugt werden. Hierbei wird vorzugsweise dasselbe erste Metallpulver und dieselbe Laserapparatur 12 beim Verfahren des selektiven Laserschmelzens (SLM) eingesetzt. Besonders einfach ist diese Art des Vorgehens, wenn die Bauteile 16 und 18 (und gegebenenfalls weitere Bauteile 20 gemäss Fig. 8 und 9) untereinander gleich sind. Wenn nämlich benachbarte Bauteile (16 und 18 beziehungsweise 18 und 20 im Bezug auf die jeweilige Trennschicht (17 und 19) jeweils spiegelbildlich zueinander angeordnet sind, stossen sie mit gleichen Flächen aneinander, so dass eine einzige Trennschicht in ihrer Form und Ausdehnung an beide angrenzenden Bauteile angepasst ist.

Ist ein einzelnes Bauteil 16 oder eine übereinander angeordnete Abfolge von mehreren Bauteilen 16, 18 und 20 gemäss Fig. 8 nach dem oben beschriebenen Verfahren mit den zugehörigen Trennschichten 11, 17 und 19 mit dem oben beschriebenen Verfahren fertig hergestellt worden, erfolgt auf einfache Weise eine Trennung beziehungsweise Vereinzelung der Bauteile dadurch, dass die zugehörigen Trennschichten 11, 17 und 19 ohne weitere mechanische Bearbeitung durch Anwendung einer geeigneten Säure beseitigt oder aufgeschmolzen werden. Insbesondere werden die Trennschichten 11, 17 und 19 durch lokales Aufheizen im Bereich der Trennschichten aufgeschmolzen. Durch ein solches lokales Aufheizen kann der Zeit- und Energieaufwand begrenzt und die Diffusion von Stoffen aus den Trennschichten in die benachbarten Bauteile stark eingeschränkt werden.

Gemäss Fig. 8 kann das lokale Aufheizen durch induktive Erwärmung der jeweiligen Trennschicht bewirkt werden. Zum Aufschmelzen der Trennschicht 17 kann diese Trennschicht von einer Induktionsspule 21 umschlossen werden, die von einem Steuergerät 22 mit geeigneten Wechselströmen versorgt wird. Die in der Trennschicht 17 dadurch induzierten Ströme heizen die Trennschicht auf, bis der Schmelzpunkt des Trennschicht-Materials überschritten ist. Eine geeignete Regelung kann dafür sorgen, dass die eingespeiste Energie nach Überschreiten des Schmelzpunktes abgeregelt wird, um eine Gefährdung des Bauteils sicher auszuschliessen. Es ist aber auch denkbar, dass das lokale Aufheizen mittels Bestrahlung erfolgt. Im Beispiel der Fig. 8 wird dies an der Trennschicht 11 durch Einsatz einer geeigneten Strahlungsquelle 23 verdeutlicht. Es ist aber auch möglich, dass das lokale Aufheizen in einem aufgeheizten Bad mit einer anorganischen Schmelze (z. B. Salzschmelze) oder mit organischen Substanzen erfolgt, deren Siedepunkt in geeigneter Weise gewählt ist.

Sind die Trennschichten 11, 17 und 19 auf diese Weise aufgeschmolzen worden, können die erzeugten Bauteile 16, 18 und 20 gemäss Fig. 9 ohne Werkzeuge von der Plattform 10 bzw. voneinander leicht getrennt werden.

Mit der Erfindung ergeben sich die folgenden Vorteile:
- Bei bisherigen Verfahren waren die auf einem Substrat beziehungsweise einer Plattform oder einer Tragstruktur hergestellten SLM-Teile mit der entsprechenden Unterlage fest verbunden und mussten durch ein EDM-Verfahren oder dergleichen abgetrennt werden. Ein solches aufwändiges Trennverfahren ist mit der Erfindung überflüssig geworden.
- Die Erfindung ermöglicht die Herstellung eines Stapels von gleichartigen Bauteilen unter besserer Ausnutzung des Prozessraums der Anlage, was die Herstellung vereinfacht und beschleunigt und damit zu günstigeren Herstellungskosten pro Bauteil führt.
- Innerhalb des erfindungsgemässen Verfahrens können das erste und das zweite Metallpulver voneinander getrennt gehalten werden, so dass eine Vermischung vermieden wird. Damit kann teures, übrig bleibendes Metallpulver wieder verwendet werden.
- Insgesamt ergibt sich durch die Erfindung einer Erhöhung der Produktivität und Flexibilität, eine vereinfachte Handhabung und eine Reduktion der Produktionskosten.

### BEZUGSZEICHENLISTE

- 10: Plattform
- 11,17,19: Trennschicht
- 12: Laserapparatur
- 13: Laser
- 14: Umlenkspiegel (schwenkbar)
- 15: Laserstrahl
- 16,18,20: Bauteil (3D)
- 16': Interdiffusionszone
- 21: Induktionsspule
- 22: Steuergerät
- 23: Strahlungsquelle
- 24: Formwerkzeug

## Patentansprüche

1. Verfahren zum Herstellen eines 3-dimensionalen Bauteils (16, 18, 20) mittels selektiven Laserschmelzens (SLM), bei welchem Verfahren das Bauteil (16, 18, 20) auf einer Plattform (10) oder einer Unterlage (16, 18) durch sukzessives Aufschmelzen von Metallpulver-Schichten eines ersten Metallpulvers unter Ausbildung einer übereinander liegenden Schichtenfolge gebildet wird, wobei zur leichteren Trennung des fertigen Bauteils (16, 18, 20) von der Plattform (10) beziehungsweise seiner Unterlage (16, 18) zwischen dem Bauteil (16, 18, 20) und der Plattform (10) beziehungsweise der Unterlage (16, 18) eine Trennschicht (11, 17, 19) vorgesehen wird, welche eine Trennung des fertigen Bauteils (16, 18, 20) von der Plattform (10) beziehungsweise der Unterlage (16, 18) ohne Beschädigung des fertigen Bauteils (16, 18) ermöglicht, **dadurch gekennzeichnet, dass** die Trennschicht (11, 17, 19) aus einem schmelzbaren Material besteht, dessen Schmelzpunkt kleiner ist als der Schmelzpunkt des zur Ausbildung des Bauteils (16, 18, 20) verwendeten ersten Metallpulvers.

2. Verfahren nach Anspruch 1, **dadurch gekennzeichnet, dass** die Trennschicht (11, 17, 19) aus einem zweiten Metallpulver gebildet wird, das schichtenweise, insbesondere mittels Laserstrahlung, aufgeschmolzen wird.

3. Verfahren nach Anspruch 2, **dadurch gekennzeichnet, dass** die Trennschicht (11, 17, 19) als eine homogene Schicht ausgebildet wird.

4. Verfahren nach Anspruch 2, **dadurch gekennzeichnet, dass** die Trennschicht (11, 17, 19) als mehrschichtige Schichtanordnung ausgebildet wird.

5. Verfahren nach einem der Ansprüche 1 bis 4, **dadurch gekennzeichnet, dass** die Trennschicht (11, 17, 19) aus einem Lot, insbesondere einer Lot-Legierung auf der Basis eines Metalls aus der Reihe Al, Ag, Cu, Sn, Cd, Zn, Pb, In, Ga, Bi und Sb gebildet wird.

6. Verfahren nach einem der Ansprüche 1 bis 5, **dadurch gekennzeichnet, dass** das schmelzbare Material der Trennschicht (11, 17, 19) eine Schmelztemperatur aufweist, die oberhalb 100 °C liegt.

7. Verfahren nach Anspruch 6, **dadurch gekennzeichnet, dass** das schmelzbare Material der Trennschicht (11, 17, 19) eine Schmelztemperatur aufweist, die oberhalb 300 °C liegt.

8. Verfahren nach einem der Ansprüche 1 bis 7, **dadurch gekennzeichnet, dass** der Schmelzpunkt des zur Ausbildung des Bauteils (16, 18, 20) verwendeten ersten Metallpulvers oberhalb 700 °C liegt.

9. Verfahren nach Anspruch 8, **dadurch gekennzeichnet, dass** der Schmelzpunkt des zur Ausbildung des Bauteils (16, 18, 20) verwendeten ersten Metallpulvers zwischen 700 °C und 1700 °C liegt.

10. Verfahren nach einem der Ansprüche 1-9, **dadurch gekennzeichnet, dass** als erstes Metallpulver ein Pulver aus der Reihe Nickelbasislegierung, Kobaltbasislegierung, Titanbasislegierung und Eisenbasislegierung verwendet wird.

11. Verfahren nach Anspruch 1, **dadurch gekennzeichnet, dass** zur Trennung des fertigen Bauteils (16, 18, 20) von der Plattform (10) beziehungsweise der Unterlage (16, 18) die zugehörige Trennschicht (11, 17, 19) ohne weitere mechanische Bearbeitung aufgeschmolzen wird.

12. Verfahren nach Anspruch 11, **dadurch gekennzeichnet, dass** die Trennschicht (11, 17, 19) durch lokales Aufheizen im Bereich der Trennschicht (11, 17, 19) aufgeschmolzen wird.

13. Verfahren nach Anspruch 12, **dadurch gekennzeichnet, dass** das lokale Aufheizen durch induktive Erwärmung (21, 22) bewirkt wird.

14. Verfahren nach Anspruch 12, **dadurch gekennzeichnet, dass** das lokale Aufheizen mittels Bestrahlung (23) erfolgt.

15. Verfahren nach Anspruch 12, **dadurch gekennzeichnet, dass** das lokale Aufheizen in einem aufgeheizten Bad erfolgt.

16. Verfahren nach einem der Ansprüche 1 bis 15, **dadurch gekennzeichnet, dass** eine Trennschicht (11, 17, 19) verwendet wird mit einer Dicke zwischen 30 µm und 300 µm, vorzugsweise zwischen 50 µm und 150 µm, insbesondere zwischen 60 µm und 100 µm.

17. Verfahren nach Anspruch 1, **dadurch gekennzeichnet, dass** das Bauteil (16, 18, 20) zur angrenzenden Trennschicht (11, 17, 19) hin je nach Anwendung mit einem mehr oder weniger grossen Übermass hergestellt wird, welches eine Interdiffusionszone (16') umfasst, deren Dicke sich nach der Art des schmelzbaren Materials der angrenzenden Trennschicht (11, 17, 19) richtet, und dass das Übermass nach Fertigstellung des Bauteils (16, 18, 20) und Trennung des Bauteils (16, 18, 20) von der Plattform (10) beziehungsweise Unterlage (16, 18) entfernt wird.

18. Verfahren nach Anspruch 17, **dadurch gekennzeichnet, dass** die Dicke der Interdiffusionszone (16') nicht mehr als 500 µm beträgt, vorzugsweise kleiner ist als 200 µm.

19. Verfahren nach Anspruch 1, **dadurch gekennzeichnet, dass** die Trennschicht (11, 17, 19) aus einer Metallfolie gebildet wird.

20. Verfahren nach Anspruch 19, **dadurch gekennzeichnet, dass** die Metallfolie mittels Laserstrahlung an ihrem Einsatzort fixiert wird.

21. Verfahren nach Anspruch 19 oder 20, **dadurch gekennzeichnet, dass** die Metallfolie einen Zusatz zur Absenkung des Schmelzpunktes aufweist, und dass der Zusatz so gewählt ist, dass er, insbesondere beim Aufheizen der Trennschicht (11, 17, 19), nicht in das Bauteil (16, 18, 20) eindiffundiert.

22. Verfahren nach Anspruch 2, **dadurch gekennzeichnet, dass** beim Erzeugen der Trennschicht (11, 17, 19) zur Trennung der verschiedenen Metallpulver ein randseitig begrenzendes Formwerkzeug (24) verwendet wird.

23. Verfahren nach einem der Ansprüche 1-22, **dadurch gekennzeichnet, dass** mehrere Bauteile (16, 18, 20) nacheinander und in einem Stapel über einander hergestellt werden, wobei das zuvor fertig gestellte Bauteil als Unterlage für das nächste Bauteil dient, und dass zwischen benachbarten Bauteilen (16, 18, 20) jeweils eine Trennschicht (17, 19) angeordnet wird.

24. Verfahren nach Anspruch 23, **dadurch gekennzeichnet, dass** die mehreren Bauteile (16, 18, 20) untereinander gleich sind, und dass benachbarte Bauteile im Bezug auf die Trennschicht (17, 19) jeweils spiegelbildlich zueinander angeordnet sind, so dass sie mit gleichen Flächen aneinander stossen.

## Claims

1. Process for producing a 3-dimensional component (16, 18, 20) by means of selective laser melting (SLM), in which process the component (16, 18, 20) is formed on a platform (10) or a support (16, 18) by successively melting layers of metal powder of a first metal powder to form a sequence of stacked layers, wherein the separation of the finished component (16, 18, 20) from the platform (10) or the support (16, 18) thereof is simplified by providing a separating layer (11, 17, 19) between the component (16, 18, 20) and the platform (10) or the support (16, 18), this separating layer making it possible to separate the finished component (16, 18, 20) from the platform (10) or the support (16, 18) without damaging the finished component (16, 18), **characterized in that** the separating layer (11, 17, 19) consists of a meltable material having a melting point which is lower than the melting point of the first metal powder used to form the component (16, 18, 20).

2. Process according to Claim 1, **characterized in that** the separating layer (11, 17, 19) is formed from a second metal powder which is melted in layers, in particular by means of laser radiation.

3. Process according to Claim 2 **characterized in that** the separating layer (11, 17, 19) is in the form of a homogeneous layer.

4. Process according to Claim 2, **characterized in that** the separating layer (11, 17, 19) is in the form of a multilayer layer arrangement.

5. Process according to one of Claims 1 to 4, **characterized in that** the separating layer (11, 17, 19) is formed from a solder, in particular a solder alloy based on a metal from the group consisting of Al, Ag, Cu, Sn, Cd, Zn, Pb, In, Ga, Bi and Sb.

6. Process according to one of Claims 1 to 5, **characterized in that** the meltable material of the separating layer (11, 17, 19) has a melting temperature of above 100°C.

7. Process according to Claim 6, **characterized in that** the meltable material of the separating layer (11, 17, 19) has a melting temperature of above 300°C.

8. Process according to one of Claims 1 to 7, **characterized in that** the melting point of the first metal powder used to form the component (16, 18, 20) is above 700°C.

9. Process according to Claim 8, **characterized in that** the melting point of the first metal powder used to form the component (16, 18, 20) is between 700°C and 1700°C.

10. Process according to one of Claims 1-9, **characterized in that** the first metal powder used is a powder from the group consisting of a nickel-based alloy, cobalt-based alloy, titanium-based alloy and iron-based alloy.

11. Process according to Claim 1, **characterized in that** the finished component (16, 18, 20) is separated from the platform (10) or the support (16, 18) by melting the associated separating layer (11, 17, 19) without further machining.

12. Process according to Claim 11, **characterized in that** the separating layer (11, 17, 19) is melted by local heating in the region of the separating layer (11, 17, 19).

13. Process according to Claim 12, **characterized in that** the local heating is effected by inductive heating (21, 22).

14. Process according to Claim 12, **characterized in that** the local heating is effected by means of irradiation (23).

15. Process according to Claim 12, **characterized in that** the local heating is effected in a heated bath.

16. Process according to one of Claims 1 to 15, **characterized in that** use is made of a separating layer (11, 17, 19) having a thickness of between 30 µm and 300 µm, preferably between 50 µm and 150 µm, in particular between 60 µm and 100 µm.

17. Process according to Claim 1, **characterized in that**, depending on the application, the component (16, 18, 20) is produced, with respect to the adjoining separating layer (11, 17, 19), with a more or less large overdimensioning, which comprises an interdiffusion zone (16') having a thickness which is determined by the nature of the meltable material of the adjoining separating layer (11, 17, 19), and **in that** the overdimensioning is removed once the component (16, 18, 20) has been finished and the component (16, 18, 20) has been separated from the platform (10) or support (16, 18).

18. Process according to Claim 17, **characterized in that** the thickness of the interdiffusion zone (16') is not more than 500 µm, preferably less than 200 µm.

19. Process according to Claim 1, **characterized in that** the separating layer (11, 17, 19) is formed from a metal foil.

20. Process according to Claim 19, **characterized in that** the metal foil is fixed in the place where it is used by means of laser radiation.

21. Process according to Claim 19 or 20, **characterized in that** the metal foil comprises an addition to reduce the melting point, and **in that** the addition is selected such that it does not diffuse into the component (16, 18, 20), in particular during heating of the separating layer (11, 17, 19).

22. Process according to Claim 2, **characterized in that** a molding tool (24) delimiting the edge side is used during the production of the separating layer (11, 17, 19) for separating the various metal powders.

23. Process according to one of Claims 1-22, **characterized in that** a plurality of components (16, 18, 20) are produced in succession and one above another in a stack, wherein the previously finished component serves as a support for the next component, and **in that** a separating layer (17, 19) is arranged in each case between adjacent components (16, 18, 20).

24. Process according to Claim 23, **characterized in that** the plurality of components (16, 18, 20) are identical to one another, and **in that** adjacent components in relation to the separating layer (17, 19) are in each case arranged in mirror-image form with respect to one another, such that they abut against one another with identical surfaces.

## Revendications

1. Procédé de fabrication d'un composant tridimensionnel (16, 18, 20) à l'aide d'une fusion laser sélective (SLM), procédé dans lequel on forme le composant (16, 18, 20) sur une plate-forme (10) ou une base (16, 18) par fusion successive de couches de poudre métallique d'une première poudre métallique avec formation d'une succession de couches superposées, dans lequel il est prévu, pour faciliter la séparation du composant terminé (16, 18, 20) de la plate-forme (10) ou de sa base (16, 18), entre le composant (16, 18, 20) et la plate-forme (10) ou la base (16, 18), une couche de séparation (11, 17, 19) qui permet une séparation du composant terminé (16, 18, 20) de la plate-forme (10) ou de la base (16, 18) sans endommager le composant terminé (16, 18), **caractérisé en ce que** la couche de séparation (11, 17, 19) se compose d'une matière fusible, dont le point de fusion est inférieur au point de fusion de la première poudre métallique utilisée pour la formation du composant (16, 18, 20).

2. Procédé selon la revendication 1, **caractérisé en ce que** l'on forme la couche de séparation (11, 17, 19) en une deuxième poudre métallique, que l'on fond par couches, en particulier au moyen d'un rayonnement laser.

3. Procédé selon la revendication 2, **caractérisé en ce que** l'on forme la couche de séparation (11, 17, 19) sous la forme d'une couche homogène.

4. Procédé selon la revendication 2, **caractérisé en ce que** l'on forme la couche de séparation (11, 17, 19) sous la forme d'un arrangement stratifié à plusieurs couches.

5. Procédé selon l'une quelconque des revendications 1 à 4, **caractérisé en ce que** l'on forme la couche de séparation (11, 17, 19) en une brasure, en particulier un alliage de brasage à base d'un métal de la série Al, Ag, Cu, Sn, Cd, Zn, Pb, In, Ga, Bi et Sb.

6. Procédé selon l'une quelconque des revendications 1 à 5, **caractérisé en ce que** la matière fusible de la couche de séparation (11, 17, 19) présente une température de fusion, qui est supérieure à 100°C.

7. Procédé selon la revendication 6, **caractérisé en ce que** la matière fusible de la couche de séparation (11, 17, 19) présente une température de fusion, qui est supérieure à 300°C.

8. Procédé selon l'une quelconque des revendications 1 à 7, **caractérisé en ce que** le point de fusion de la première poudre métallique utilisée pour la formation du composant (16, 18, 20) est supérieur à 700°C.

9. Procédé selon la revendication 8, **caractérisé en ce que** le point de fusion de la première poudre métallique utilisée pour la formation du composant (16, 18, 20) est compris entre 700°C et 1700°C.

10. Procédé selon l'une quelconque des revendications 1 à 9, **caractérisé en ce que** l'on utilise comme première poudre métallique une poudre de la série alliage à base de nickel, alliage à base de cobalt, alliage à base de titane et alliage à base de fer.

11. Procédé selon la revendication 1, **caractérisé en ce que**, pour la séparation du composant terminé (16, 18, 20) de la plate-forme (10) ou de la base (16, 18), on fond la couche de séparation correspondante (11, 17, 19) sans autre usinage mécanique.

12. Procédé selon la revendication 11, **caractérisé en ce que** l'on fond la couche de séparation (11, 17, 19) par chauffage local dans la région de la couche de séparation (11, 17, 19).

13. Procédé selon la revendication 12, **caractérisé en ce que** l'on effectue le chauffage local par chauffage par induction (21, 22).

14. Procédé selon la revendication 12, **caractérisé en ce que** l'on effectue le chauffage local par application d'un rayonnement (23).

15. Procédé selon la revendication 12, **caractérisé en ce que** l'on effectue le chauffage local dans un bain chauffé.

16. Procédé selon l'une quelconque des revendications 1 à 15, **caractérisé en ce que** l'on utilise une couche de séparation (11, 17, 19) avec une épaisseur comprise entre 30 µm et 300 µm, de préférence entre 50 µm et 150 µm, en particulier entre 60 µm et 100 µm.

17. Procédé selon la revendication 1, **caractérisé en ce que** l'on fabrique le composant (16, 18, 20) vers la couche de séparation adjacente (11, 17, 19) selon l'application avec une surépaisseur plus ou moins importante, qui comprend une zone de diffusion intermétallique (16'), dont l'épaisseur est fixée selon la nature de la matière fusible de la couche de séparation adjacente (11, 17, 19), et **en ce que** l'on enlève la surépaisseur après l'achèvement du composant (16, 18, 20) et la séparation du composant (16, 18, 20) de la plate-forme (10) ou de la base (16, 18).

18. Procédé selon la revendication 17, **caractérisé en ce que** l'épaisseur de la zone de diffusion intermétallique (16') n'est pas supérieure à 500 µm, et est de préférence inférieure à 200 µm.

19. Procédé selon la revendication 1, **caractérisé en ce que** l'on forme la couche de séparation (11, 17, 19) à partir d'une feuille métallique.

20. Procédé selon la revendication 19, **caractérisé en ce que** l'on fixe la feuille métallique à son lieu d'utilisation au moyen d'un rayonnement laser.

21. Procédé selon la revendication 19 ou 20, **caractérisé en ce que** la feuille métallique présente un ajout destiné à abaisser le point de fusion, et **en ce que** l'on choisit l'ajout de telle manière qu'il ne diffuse pas dans le composant (16, 18, 20), en particulier lors du chauffage de la couche de séparation (11, 17, 19).

22. Procédé selon la revendication 2, **caractérisé en ce que**, lors de la production de la couche de séparation (11, 17, 19) pour la séparation des différentes poudres métalliques, on utilise un outil de moulage (24) qui la limite en périphérie.

23. Procédé selon l'une quelconque des revendications 1 à 22, **caractérisé en ce que** l'on fabrique plusieurs composants (16, 18, 20) l'un après l'autre et en une pile l'un sur l'autre, dans lequel le composant terminé antérieurement sert de base pour le composant suivant, et **en ce que** l'on dispose chaque fois une couche de séparation (17, 19) entre des composants voisins (16, 18, 20).

24. Procédé selon la revendication 23, **caractérisé en ce que** les plusieurs composants (16, 18, 20) sont identiques l'un à l'autre, et **en ce que** des composants voisins sont chaque fois disposés symétriquement l'un à l'autre par rapport à la couche de séparation (17, 19), de telle manière qu'ils soient en contact l'un avec l'autre par des surfaces égales.
